Europäisches Patentamt

European Patent Office

Office européen des brevets

(11) Veröffentlichungsnummer: **0 122 951**
**A1**

## (12) EUROPÄISCHE PATENTANMELDUNG

(21) Anmeldenummer: 83103949.0

(22) Anmeldetag: 22.04.83

(51) Int. Cl.³: **B 30 B 15/00**
**F 16 F 15/04**

(43) Veröffentlichungstag der Anmeldung:
31.10.84 Patentblatt 84/44

(84) Benannte Vertragsstaaten:
CH DE FR GB IT LI

(71) Anmelder: L. SCHULER GmbH
Bahnhofstrasse 41 - 67 Postfach 1222
D-7320 Göppingen(DE)

(72) Erfinder: Dexling, Hartmut
Lessingstrasse 1
D-7344 Gingen/Fils(DE)

(54) Einrichtung zur schwingungsisolierten Aufstellung von Pressen.

(57) Die in der Figure gezeigte Einrichtung dient der schwingungsisolierten Aufstellung von Pressen (1). Zwischen dem Gestell der Presse und dem Fundament (2) bzw. dem Boden der Fundamentgrube sind Isolierelemente (3) eingebracht, die für die Aufnahme von Schwingungen des Pressengestells in der vertikalen Bewegungsrichtung ausgelegt sind. Desweiteren sind Lenker (4, 5, 7, 8) zwischen dem Pressengestell und dem Fundament in federnd abgestützten Drehlagern (6) gelenkig gelagert. Die Lenker (7, 8) eines Lenkerpaares sind mit dem jeweils pressenfernen Lenkerende mit einem Drehstab (9) zur Pressenstabilisierung starr verbunden, der drehbar in fundamentfesten Lagern (6) abgestützt ist.

FIG.1

EP 0 122 951 A1

Croydon Printing Company Ltd

L. Schuler GmbH                          15. April 1983

Bahnhofstr. 41-67                        P 8062 EP  KP/F

Postfach 1222


D-7320 Göppingen


Einrichtung zur schwingungsisolierten Aufstellung von Pressen
——————————————————————————————————————————————————————————————


Die  Erfindung betrifft eine Einrichtung zur schwingungsisolierten Aufstellung von Pressen unter Verwendung von Schwingungsisolierelementen und von Pressenstabilisierungsmitteln zwischen Pressengestell und Fundament.

Pressen der genannten Art sind periodisch arbeitende Maschinen mit vertikaler Wirkrichtung des Stößels. Der bewegte Pressenstößel erzeugt während jedes Umformvorganges eine Schwingungsanregung des Untergrundes.

Zur Vermeidung der Schwingungsanregung des Untergrundes ist es bei einem Schabotten-Gesenkhammer nach der DE-PS 12 03 578 bekannt, die Schabotte über ein eingeschlossenes hydraulisches Mittel gegenüber dem Fundament abzustützen. Durch die Schlagenergie wird das hydraulische Mittel verdrängt und das anschließende Rückfließen durch eine beim Verdrängen aufgebaute Gegenkraft bewirkt. Das hydraulische Mittel  ist in Druckschläuchen eingeschlossen, die einerseits über ein Rückschlagventil und zum anderen über ein einstellbares Ventil mit an eine Preßluftleitung angeschlossenen Windkesseln in Verbindung stehen. Die Schabotte kann sowohl nach unten als auch zu den Seiten hin ausweichen und sich hierbei gegebenenfalls verdrehen. Zur Erhöhung (Verbesserung) der Standfestigkeit des Schabotten-Gesenkhammers muß der Sockel der Schabotte und mit diesem die Fundamentgrube vergrößert ausgebildet werden.

Zur Behebung dieser Mängel ist in der DE-AS 23 46 591 eine Vorrichtung zur Dämpfung der Schabotte eines Schmiedehammers beschrieben worden, die auf mehreren Zylinder-Kolben-Einheiten steht. Diese Einheiten sind als Differentialkolben-Einheiten ausgebildet, deren Zylinderräume an den Unterseiten der Differentialkolben über Drosseln und Druckminderventile an eine Druckluftzufuhr angeschlossen sind. Darüber hinaus sind die Zylinderräume über gesonderte Leitungen mit einstellbaren Überströmventilen fließverbunden. Die Leitungen zu den Überströmventilen stehen über Rückschlagventile mit den oberhalb der Differentialkolben befindlichen Zylinderräumen in Verbindung, die wiederum über mit Drosseln versehene Leitungen an die Druckluftzufuhr angeschlossen sind. Diese Vorrichtung verfügt zwar über gute Feder- und Dämpfungseigenschaften, die Schabotte erfährt über die Führung der Kolben in den Zylindern, die Drosseln in den Rückströmleitungen und einen weiteren gegen ein Wegwandern des Gesenkhammers vorgesehenen Rahmen am Schabottenfuß zusätzliche, sich auf ein Einschwingen der Presse auswirkende Dämpfungen. Dämpfungsmaßnahmen in dieser Form führen zu Schwingungsübertragungen auf das Fundament.

Aus der DE-OS 26 52 321 ist es bekannt, die Schabotte abstützende Federn vorzuspannen und die Schabotte über zusätzliche Reibungsdämpfer zu dämpfen. Hierzu stützen sich einerseits die Federn zwischen je einem Teller und einer Buchse ab, wobei die federnde Länge der Feder (Vorspannung) über einen Gewindebolzen einstellbar ist, und andererseits sind zur Verringerung der Auslenkbewegung Reibungsdämpfer zwischen je einer Schabottenlängswand und einer Schabottenquerwand und den entgegenstehenden Wänden der Fundamentgrube und weitere Reibungsdämpfer über schwenkbar gelagerte Lenker zwischen Wand der Fundamentgrube und Schabottenfuß den zuerst genannten Reibungsdämpfern gegenüberliegend angeordnet. Diese Anordnung verhindert ein freies Schwingen der Schabotte nach dem Formvorgang, und es treten in erhöhtem Maße Stoßübertragungen auf das Fundament auf.

Weiterhin ist es bekannt, die Fundamentplatte in ihrer Standfläche und/oder Masse zu vergrößern, um so einen ausreichenden Abstand zwischen Pendeleigenfrequenz der Presse und Frequenzgang des Stößels zu erreichen.

Demgegenüber ist es Aufgabe der Erfindung, eine Einrichtung der im Oberbegriff des Patentanspruches 1 angegebenen Art zu schaffen, bei der das Gestell einer Presse über die Schwingungsisolierelemente ohne Reibungseinwirkung durch Führungs- und Stabilisierungsmittel vertikal frei schwingen kann. Hierbei soll das der Einrichtung zugrunde liegende System so abgestimmt sein, daß die Standfestigkeit der Presse in den horizontalen Richtungen gewährleistet ist und die Pendelfrequenz außerhalb der Arbeitsfrequenzen (Frequenzen des Betriebsbereiches) der Presse liegt.

Gelöst wird die Aufgabe mit Schwingungsisolierelementen, die Schwingungen der Presse in vertikaler Auslenkbewegung aufnehmend ausgebildet sind, und durch Stabilisierungsmittel aus Lenkern, die an der Presse und am Fundament in vertikaler Auslenkrichtung der Presse dämpfungsarm schwingbeweglich befestigt sind. Die Stabilisierungsmittel beeinträchtigen nicht die Wirkung der Schwingungsisolierung, verringern jedoch die Auslenkbewegungen der Presse auf die Richtungen der von den Schwingungsisolierelementen aufzufangenden Auslenkbewegung der Presse.

Die weiteren Patentansprüche beinhalten erfindungswesentliche und vorteilhafte Ausgestaltungen der Erfindung.

Die Schwingungsisolierelemente für mittelschnell- bis schnellaufende Pressen sind in vorteilhafter Weise derart ausgelegt, daß die vertikale Eigenfrequenz der Aufstellung unterhalb der Frequenzen des Betriebsbereiches der Presse liegt. Dadurch werden nicht nur Schwingungen aus der Arbeitsanregung, sondern auch die Massenkräfte der Presse zu einem erheblichen Teil isoliert, so daß auf einen Massenausgleich verzichtet werden kann.

Für langsamlaufende Pressen, bei denen die vertikale Eigenfrequenz der Schwingungsisolierung aus technologischen Gründen über den Frequenzen des Betriebsbereiches liegt, kann durch die Anlenkung auf eine sonst notwendige vergrößerte Fundamentplatte verzichtet werden.

Weitere Vorteile der Erfindung ergeben sich aus der nachfolgenden Beschreibung der in der Zeichnung dargestellten Ausführungsbeispiele. Dabei zeigen:

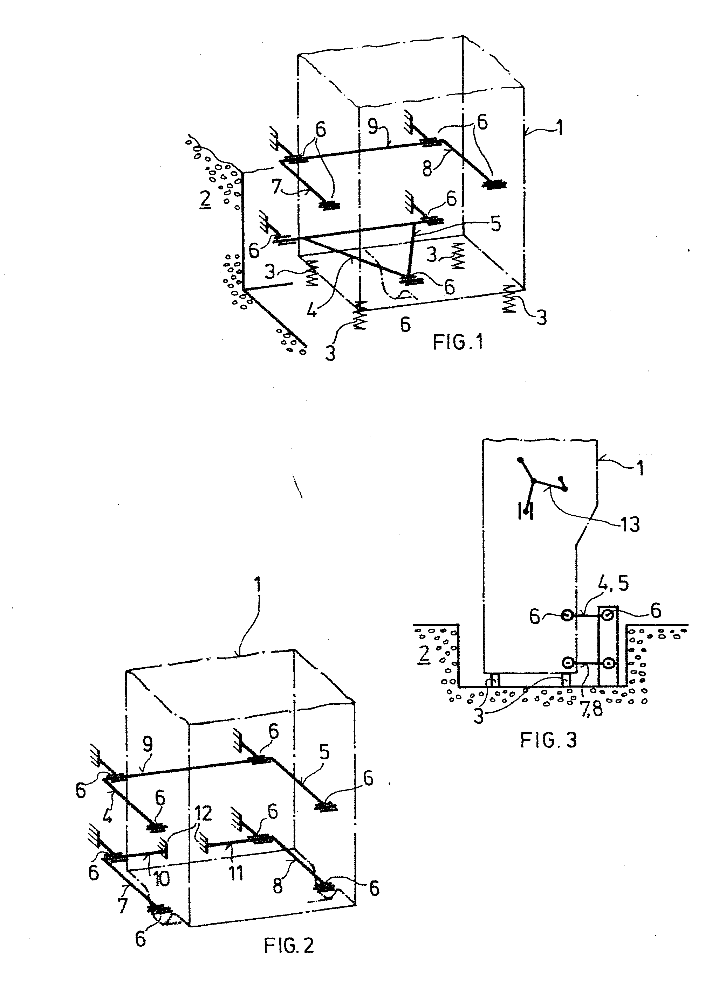

Fig. 1    in schematischer Darstellung eine erste Anordnung von Schwingungsisolierelementen und Lenkersystem mit einer ersten Fundamentgründung,

- 4 -                                    0122951

| Fig. 2 | in schematischer Darstellung Schwingungsisolierelemente und Lenkersystem in einer zweiten möglichen Anordnung, |
| Fig. 3 | Schwingungsisolierelemente und Lenkersystem für eine langsamlaufende Presse mit antriebsbedingt großem Kopfteil, |
| Fig. 4 | eine mögliche Aufhängung für einen Lenker in einer Schnittdarstellung, |
| Fig. 5 | ein Schwingungsisolierelement und |
| Fig. 6 | eine Presse mit einer weiteren Fundamentgründung. |

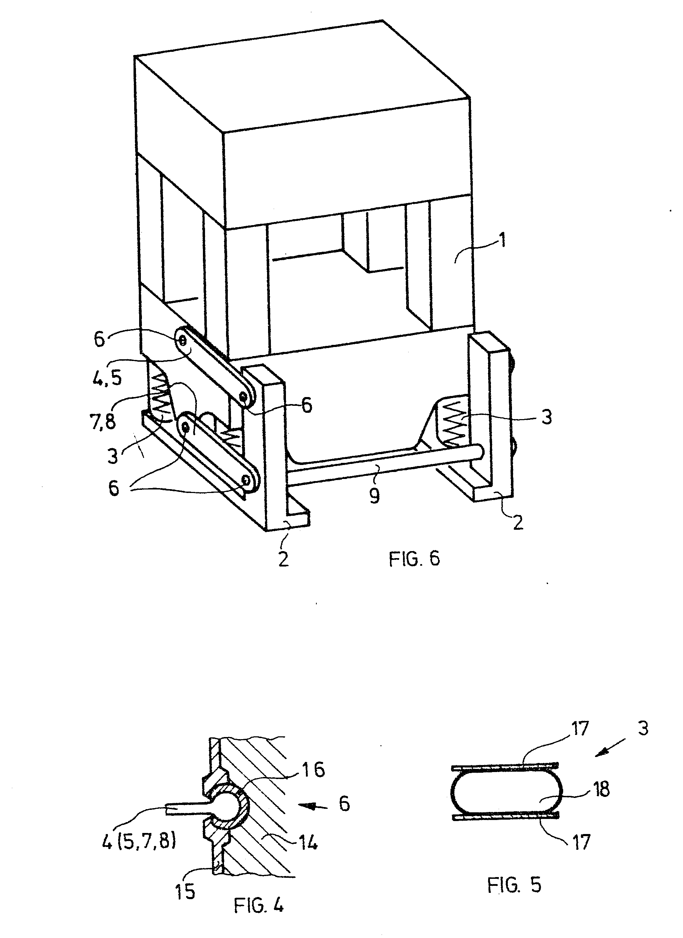

Fig. 1 zeigt eine Presse 1, die in z.B. einer Grube des Fundamentes 2 über Schwingungsisolierelemente 3, von denen ein Element in Fig. 5 in beispielhafter Ausführung gezeigt wird, aufgestellt ist. Art und Anzahl der Schwingungsisolierelemente sind eingestellt auf eine aus diesen und der Pressenmasse berechenbare Eigenfrequenz tiefer Abstimmung. Die Presse wird über ein Lenkersystem gestützt aus Lenkern 4 und 5, die getrennt am Pressengestell 1 oder, wie gezeigt, zu einem Dreiecklenker ausgebildet in einem gemeinsamen Anlenkpunkt 6 an diesem angreifen können.

Die Lenker 4 und 5 sind an der Presse und in fundamentfesten Lagern 6 aufgehängt, wie sie näher zu Fig. 4 beschrieben werden. Ein weiteres Lenkerpaar 7, 8 ist an entfernt voneinander am Pressengestell 1 befindlichen Lagern 6 der Art nach Fig. 4 gelagert. Anderendig sind die Lenker 7, 8 an einem Drehstab 9, der in der Art einer Torsionsfeder ausgeführt ist, starr befestigt. Der Drehstab 9 ist drehbar in fundamentfesten Lagern 6 der Art nach Fig. 4 gelagert, wirkt den Pendel- bzw. Nickbewegungen der Presse entgegen und ist im Sinne voriger Überlegungen hoch abgestimmt. Die Aufhängung des Drehstabes 9 am Fundament 2 kann parallel zur Aufhängung der Lenker 4, 5 an der Presse erfolgen. Die Abstützung durch die Lenker, das Lenkersystem, bildet Gegenmomente und Gegenkräfte zu den unwuchtbedingten Momenten und Kräften der Presse.

Fig. 2 zeigt die Lenker 4, 5, die einendig in Lagern 6 am Pressengestell 1 angelenkt und anderendig starr an dem als Stabilisator dienenden Drehstab 9 befestigt sind. Die Lenker 7, 8 sind einendig in Lagern 6 am Pressengestell 1 angelenkt, anderendig hier an je einer Torsionsfeder 10, 11 starr befestigt.

Die Torsionsfedern 10, 11 können, wie hier gezeigt, parallel zu dem Drehstab 9 anderendig in fundamentfesten Lagern 12 unverdrehbar und mit dem den Lenkern 7, 8 nahen Bereichen in fundamentfesten Lagern der Art nach Fig. 4 gelagert sein.

Fig. 3 zeigt die Anwendung der Einrichtung zur schwingungsisolierten Aufstellung einer langsamlaufenden Presse mit unausgeglichenen horizontalen Massenkräften und einer hohen Getriebelage. Wie mit 13 angedeutet, ist die Größe des Kopfstückes der Presse bedingt durch getriebetechnische Forderungen. Im Gegensatz zu den schnellaufenden Pressen werden die horizontalen Unwuchten· dieser Antriebe in der Regel nicht ausgeglichen. Die Stabilisierung ist bei Pressen dieser Art erfindungsgemäß über eine kleine Standfläche möglich. Die Stabilisierung des Pressengestells 1 erfolgt in einer der zuvor zu den Figuren 1 und 2 beschriebenen Weisen über Lenkerpaare 4, 5 und 7, 8.

Fig. 4 zeigt eine Lagerstelle 6 für die Lenker 4, 5, 7, 8 mit dem fundamentfesten oder auch gestellfesten Bereich 14, einem über Schraubmittel an dem Bereich 14 befestigten Lagerschild 15 und einer hier beispielhaft genannten gummielastischen Zwischenlage 16 zum Ausgleich von Lageänderungen - Pendel-/Nickbewegungen - der Presse und zur weichen Abfederung im wesentlichen horizontaler Auslenkbewegungen des Pressengestells. Die Lenker sind über die Lagerstellen 6 im Sinne der vertikalen Pressengestellauslenkung schwingbeweglich.

Fig. 5 zeigt ein Schwingungsisolierelement 3 mit je einem Flanschteil 17 für die Aufhängung am Pressengestell und für die Abstützung und einen Balg mit dem Balgvolumen 18.

Die Erfindung ist an Fundamentgründungen der in den Fig. 1 und 3 gezeigten Art mit einer Fundamentgrube nicht gebunden. So zeigt beispielsweise Fig.6 eine ebenerdig (über Flur) aufgestellte Presse 1, die fundamentmäßig über ein Gestell 2 aufgestellt ist. Zwischen der Presse 1 und dem Gestell 2 sind die aus den vorigen Figuren bekannten Schwingungsisolierelemente 3 und Pressenstabilisierungsmittel 4, 5, 7, 8, 9 in der zuvor beschriebenen Wirkungsweise angeordnet.

Für den Nicht-Betriebszustand der Presse bei Verwendung von Luftfedern sind Auflagemittel (nicht dargestellt) zwischen Pressengestell und Fundamentgrube erforderlich, auf denen sich die Presse während des Druckabbaues in den Luftpolstern für den Nicht-Betriebszustand absetzen kann.

- 6 -                                    0122951

L. Schuler GmbH                          15. April 1983

Bahnhofstr. 41-67                        P 8062 EP  KP/F

Postfach 1222


D-7320 Göppingen

Einrichtung zur schwingungsisolierten Aufstellung von Pressen
———————————————————————————————————————————————————————————


Patentansprüche:


1. Einrichtung zur schwingungsisolierten Aufstellung von Pressen unter Verwendung von Schwingungsisolierelementen ( 3, 10, 11) und von Pressenstabilisierungsmitteln ( 4, 5, 7, 8, 9 ) zwischen Pressengestell ( 1 ) und Fundament ( 2 ), **dadurch gekennzeichnet,** daß die Schwingungsisolierelemente (3, 10, 11 ) Schwingungen des Pressengestells ( 1 ) in vertikaler Auslenkbewegung aufnehmend ausgebildet sind, und die Pressenstabilisierungsmittel ( 4, 5,7,8) Lenker sind, die an dem Pressengestell ( 1 ) und am Fundament ( 2 ) in vertikaler Auslenkrichtung der Presse dämpfungsarm schwingbeweglich befestigt sind.


2. Einrichtung nach Patentanspruch 1, **gekennzeichnet durch** zumindest zwei voneinander beabstandete Lenker ( 4 bzw. 5 und 7 bzw. 8 ), die in Lagerstellen ( 6 ) an dem Pressengestell ( 1 ) in unterschiedlicher Höhe und an fundamentfesten Lagerstellen ( 6 ) schwingbeweglich gelagert sind.


3. Einrichtung nach Patentanspruch 2, **dadurch gekennzeichnet,** daß Lenker ( 4, 5 bzw. 7, 8 ) paarweise voneinander entfernt in gleicher Höhe an dem Pressengestell ( 1 ) schwingbar angeordnet sind, und daß zwei Lenker ( 7, 8 ) an einem Drehstab (9 ) befestigt sind, der um seine Längsachse und in den Festpunkten der Lenker ( 7, 8 ) nahen Bereichen in fundamentfesten Lagern ( 6 ) drehbar gelagert ist.

4. Einrichtung nach Patentanspruch 2, **dadurch gekennzeichnet,** daß zwei Lenker ( 4, 5 ) zu einem Dreiecklenker zusammengefaßt sind und zumindest in einem gemeinsamen Anlenkpunkt (Lager 6 ) an der Presse zusammengeführt sind.

5. Einrichtung nach Patentanspruch 3, **dadurch gekennzeichnet,** daß der Drehstab ( 9 ) horizontal in fundamentfesten Lagern ( 6 ) gelagert ist.

6. Einrichtung nach einem oder mehreren der vorhergehenden Patentansprüche, **dadurch gekennzeichnet,** daß die eine Drehbewegung zulassenden Lagerstellen ( 6 ) zwischen den Lenkern ( 4, 5, 7, 8 ) und den Drehstäben ( 9, 10, 11 ) sowie dem Pressengestell ( 1 ) durch gummiartige Zwischenlagen ( 16 ) elastisch abgestützt sind.

7. Einrichtung nach Patentanspruch 1, **dadurch gekennzeichnet,** daß die Schwingungsisolierelemente ( 3 ) durch Drehstäbe ( 10, 11 ) gebildet sind, die einendig am Fundament ( 2 ) fest verspannt und anderendig über je einen fest am Drehstab ( 10, 11 ) verspannten Lenker ( 7, 8 ) an entfernt voneinander befindlichen Lagern ( 6 ) des Pressengestells ( 1 ) angelenkt sind.

8. Einrichtung nach Patentanspruch 1, **dadurch gekennzeichnet,** daß die Schwingungsisolierelemente ( 3 ) als Federelemente (Luftfedern, Gummifedern, Metallfedern) ausgebildet sind, die unter dem Pressengestell ( 1 ) im Sinne einer gleichmäßigen Pressengestellabstützung verteilt angeordnet und bei einer Verwendung von Luftfedern für den Pressenbetrieb mit Druckluft beaufschlagbar sind.

FIG.1

FIG. 3

FIG. 2

0122951

FIG. 6

4 (5,7,8)

FIG. 4

FIG. 5

# EUROPÄISCHER RECHERCHENBERICHT

**Europäisches Patentamt**

**0122951**
Nummer der Anmeldung

EP 83 10 3949

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| Y | FR-A-1 272 175 (LUXEMBOURGEOISE DE BREVETS ET DE PARTICIPATIONS) *Seite 2, linke Spalte, Zeile 36 - rechte Spalte, Zeile 5; Seite 3, rechte Spalte, Zeilen 21-29; Figuren 1,2,13* | 1,2,8 | B 30 B 15/00 F 16 F 15/04 |
| Y | DE-A-2 041 278 (CONTINENTAL OIL CO.) *Seite 6, Zeile 12 - Seite 7, Zeile 25; Patentanspruch 1; Figuren 1-4* | 1-3,6, 8 | |
| Y | US-A-1 943 555 (RODE) *Seite 1; Zeile 62 - Seite 2, Zeile 22; Figuren 1,2* | 3 | |
| Y | US-A-2 850 116 (SPAETGENS) *Spalte 4, Zeilen 29-59; Figuren 5,6* | 1,7 | RECHERCHIERTE SACHGEBIETE (Int. Cl. ³) |
| D,A | DE-A-2 652 321 (BECHE & GROHS) *Insgesamt* | 1 | B 30 B B 21 J F 16 F F 16 M |

Der vorliegende Recherchenbericht wurde für alle Patentansprüche erstellt.

| Recherchenort | Abschlußdatum der Recherche | Prüfer |
|---|---|---|
| DEN HAAG | 15-12-1983 | BOLLEN J.A.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82